# EUROPÄISCHE PATENTSCHRIFT

(11) **EP 1 339 164 B1**
(45) Veröffentlichungstag und Bekanntmachung des Hinweises auf die Patenterteilung: **07.06.2006**
(21) Anmeldenummer: 03003469.8
(22) Anmeldetag: 15.02.2003
(51) Int. Cl.: H02P 6/00

(54) **Verfahren und Vorrichtung zum Betrieb eines Synchronmotors**
Method and device of driving a synchronous motor
Méthode et dispositif d'entraîner un moteur synchrone

(30) Priorität: 22.02.2002 DE 10207549
(43) Veröffentlichungstag der Anmeldung: 27.08.2003
(73) Patentinhaber: Aradex AG, 73547 Lorch (DE)
(72) Erfinder: Vetter, Thomas, 73547 Lorch (DE)
(74) Vertreter: Ruckh, Rainer Gerhard

(56) Entgegenhaltungen:
- EP-A- 1 154 558

## Beschreibung

Die Erfindung betrifft ein Verfahren und eine Vorrichtung zum Betrieb eines Synchronmotors.

Derartige Synchronmotoren werden als Antriebe von Maschinen und Anlagen in unterschiedlichen industriellen Applikationen eingesetzt. Die Synchronmotoren bilden permanenterregte elektrische Maschinen, die insbesondere als Schrittmotoren oder Servomotoren ausgebildet sein können.

Zur Erzielung einer hohen Positioniergenauigkeit werden derartige Synchronmotoren mit Positionsregelungen betrieben. Diese umfassen eine Sensorik in Form wenigstens eines Messgebers, mittels derer eine Lageermittlung des Synchronmotors durchgeführt wird. Der oder die Messgeber erfassen dabei die aktuellen Positionen von Primärteilen, welche zur Erzeugung von Magnetfeldern von vorgegebenen Strömen durchflossen sind, relativ zu den Positionen von magnetischen Sekundärteilen erfasst. Bei rotativen Synchronmotoren, insbesondere Schrittmotoren, erfolgt mittels der Sensorik die Bestimmung der aktuellen Istposition des Rotors. In Abhängigkeit der Signale dieser Sensorik wird in einem Regelkreis die Position des Synchronmotors geregelt. Entsprechend werden bei Linearmotoren mittels einer Sensorik die Positionen von Läufern über zugeordnete Spulen ermittelt und geregelt.

Mit derartigen positionsgeregelten Synchronmotoren können Produktionsabläufe in Maschinen und Anlagen mit hoher Präzision und Reproduzierbarkeit gesteuert werden. Insbesondere als Servomotoren ausgebildete Synchronmotoren weisen zudem eine hohe Dynamik auf, wodurch besonders hohe Produktivitäten der Maschinen und Anlagen erzielt werden können.

Nachteilig bei derartigen Synchronmotoren ist jedoch, dass aufgrund deren relativ aufwendigen Aufbaus die Ausfallwahrscheinlichkeiten relativ hoch sind. Insbesondere stellt die Sensorik zur Positionsregelung einen Risikofaktor dar. Ein Defekt in der Sensorik führt zu einem Ausfall des Synchronmotors und damit zu Produktionsausfällen in den mit dem Synchronmotor gesteuerten Anlagen.

Die EP 1 154 558 beschreibt eine gattungsgemäße Vorrichtung zur Steuerung eines Synchronmotors, welcher synchron zu einer anliegenden Netzspannung läuft. Die Vorrichtung weist eine Steuereinheit auf, in welcher die Phasenlage der Netzspannung erfassbar ist, und in welcher Positionierbefehle generierbar sind. Über die Steuereinheit sind erste Schaltmittel zur Vorgabe der dem Positionierbefehl entsprechenden Richtung des Synchronmotors aktivierbar. Nach erfolgter Vorgabe der Richtung sind über die Steuereinheit in Abhängigkeit der Phasenlage der Netzspannung zweite Schaltmittel aktivierbar, so dass der Synchronmotor jeweils in einer konstanten Phasenlage der Netzspannung aktiviert wird und nach einer in der Steuereinheit vorgegebenen, einer dem Positionierbefehl entsprechenden Zeit deaktiviert wird. Erfindungsgemäß wird die Vorrichtung zur Positionierung von Zustellachsen und Hilfsachsen von bahnverarbeitenden Maschinen eingesetzt.

Die JP 10 225 196 beschreibt einen Controller für einen Induktionsmotor. Zur Geschwindigkeitskontrolle des Motors ist ein Sensor vorgesehen. Bei Ausfall des Sensors wird die Geschwindigkeit in einer Bewertungseinheit geschätzt.

In dem IEEE Artikel Position-sensorless biaxial position control with industrial PM motor drives based on INFORM- an back EMF model, 2002 sind Methoden zur sensorlosen Positionsregelungen bei Synchronmotoren beschrieben.

Der Erfindung liegt die Aufgabe zugrunde einen Synchronmotor mit möglichst hoher Verfügbarkeit bereitzustellen.

Zur Lösung dieser Aufgabe sind ein Verfahren nach Anspruch 1 und eine Vorrichtung nach Anspruch 8 vorgesehen. Vorteilhafte Ausführungsformen und zweckmäßige Weiterbildungen der Erfindung sind in den Unteransprüchen beschrieben.

Bei dem erfindungsgemäßen Verfahren wird der Synchronmotor in einem Normalbetrieb betrieben, in welchem die Signale wenigstens eines Messgebers zur Positionsregelung des Synchronmotors verwendet werden. Weiterhin ist der Synchronmotor in einen Notlaufbetrieb umschaltbar, in welchem der Synchronmotor unterhalb einer Grenzgeschwindigkeit im Schrittbetrieb und oberhalb der Grenzgeschwindigkeit mit einer sensorlosen Positionsregelung betrieben wird

Der Grundgedanke der Erfindung besteht darin, bei dem Synchronmotor eine Umschaltmöglichkeit der Betriebsart vorzusehen, um dessen Verfügbarkeit zu erhöhen. Dabei wird die sensorgesteuerte Positionsregelung im Normalbetrieb vorzugsweise nur eingesetzt, falls der Messgeber keinen Defekt aufweist. Sobald ein Defekt oder allgemein ein unsicherer Betrieb des Messgebers vorliegt, erfolgt vorzugsweise selbsttätig ein Umschalten auf den Notlaufbetrieb, in welchem der Synchronmotor ohne externe Sensorik, das heißt ohne Messgeber betrieben wird.

Damit bleibt der Synchronmotor bei Ausfall des Messgebers funktionsfähig und kann im Notlaufbetrieb weiter betrieben werden. Dies bedeutet, dass plötzliche Ausfälle des Synchronmotors und damit verbundene Produktionsausfälle in Maschinen und Anlagen vermieden werden können.

Im Notlaufbetrieb arbeitet der erfindungsgemäße Synchronmotor infolge der nicht benötigten Sensorik generell zuverlässiger als im Normalbetrieb. Jedoch ist die erzielbare Dynamik des erfindungsgemäßen Synchronmotors im Normalbetrieb erheblich größer als im Notlaufbetrieb, was letztlich darauf beruht, dass auch im Notlaufbetrieb eine vergleichbare Genauigkeit wie im Normalbetrieb gefordert wird. Somit wird im Notlaufbetrieb im Vergleich zum Normalbetrieb bei etwa gleicher Genauigkeit des Synchronmotors eine niedrigere Produktivität erzielt. Die Produktivität des erfindungsgemäßen Synchronmotors entspricht dabei im Notlaufbetrieb der Produktivität von konventionellen Schrittmotoren, wogegen die Produktivität im Normalbetrieb signifikant höher ist.

Das erfindungsgemäße Verfahren vereint damit die höhere Zuverlässigkeit einer Schrittmotorsteuerung, d.h. eines Schrittbetriebes, bzw. einer sensorlosen Positionsregelung mit der höheren Produktivität eines sensorgeregelten Synchronmotors.

Die erfindungsgemäßen Synchronmotoren sind besonders vorteilhaft in Maschinen und Anlagen mit hohen Verfügbarkeitsanforderungen einsetzbar. Beispiele hierfür sind Anlagen in den Bereichen der Weltraumfahrt, Flugzeuge sowie Anlagen in den Bereichen der chemischen Industrie, der Analytik, der Medizintechnik und der Reinraumtechnik.

Beispielsweise werden in Reinräumen Synchronmotoren zum Handling von Chips, Wafern und dergleichen eingesetzt. Bei einem plötzlichen Ausfall eines Synchronmotors muss dieser im Reinraum ausgetauscht werden. Die Anlagen in derartigen Reinräumen werden typischerweise ohne Bedienpersonal betrieben, wodurch die Anforderungen der einzuhaltenden Reinheitsgrade innerhalb des Reinraumes erfüllt werden. Der Zutritt von Wartungspersonal in den Reinraum zum Austausch des Synchronmotors führt zu einer Kontamination des Reinraumes. Damit entstehen durch den Ausfall des Synchronmotors nicht nur Stillstandszeiten der mit dem Synchronmotor gesteuerten Anlage. Vielmehr muss der gesamte Reinraum für eine beträchtliche Zeitspanne stillgelegt werden, bis dieser wieder dekontaminiert ist.

Derartige Ausfallzeiten können mit dem erfindungsgemäßen Synchronmotor weitgehend vermieden werden, da bei Auftreten von Messgeber-Defekten der Synchronmotor im Notlaufbetrieb vorzugsweise bis zum nächsten fälligen regelmäßigen Wartungsintervall der jeweiligen Anlage weiter betrieben werden kann.

Die Erfindung wird im nachstehenden anhand der Zeichnung erläutert. Es zeigt:

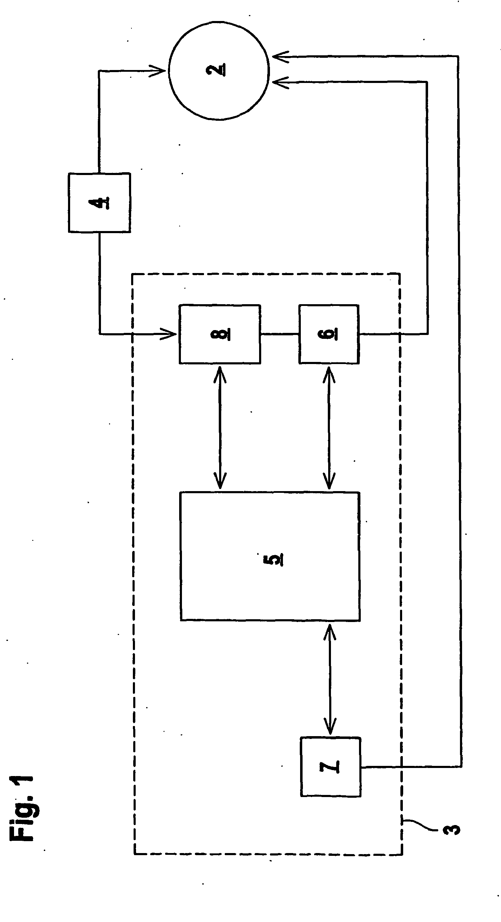

- Figur 1:: Blockschaltbild eines Ausführungsbeispiels der erfindungsgemäßen Vorrichtung zum Betrieb eines Synchronmotors.

Figur 1 zeigt ein Ausführungsbeispiel einer Vorrichtung 1 zum Betrieb eines Synchronmotors 2. Der Synchronmotor 2 ist dabei als permanenterregte elektrische Maschine aufgebaut und kann sowohl einen linearen als auch rotativen Aufbau aufweisen. Bevorzugt ist der Synchronmotor 2 als Schrittmotor oder als Servomotor ausgebildet.

Der Synchronmotor 2 kann über eine Steuereinheit 3 in verschiedenen Betriebsarten betrieben werden.

In einer ersten, den Normalbetrieb bildenden Betriebsart wird der Synchronmotor 2 mit einer sensorgesteuerten Positionsregelung betrieben. Die Sensorik zur Bestimmung der aktuellen Istpositionen des Motors ist von einem Messgeber 4 oder allgemein von einer Anordnung von Messgebern 4 gebildet. Die Messgeber 4 bestimmen bei linearen Synchronmotoren 2 die Relativpositionen von Primärteilen und Sekundärteilen, wobei die Primärteile mit Strömen vorgegebener Stromstärken zur Erzeugung von Magnetfeldern beaufschlagt sind und die Sekundärteile von Permanentmagneten gebildet sind.

Bei rotativen Synchronmotoren 2 ist als Primär- beziehungsweise Sekundärteil ein Rotor beziehungsweise ein Stator vorgesehen.

Je nach Ausbildung des Synchronmotors 2 und je nach Genauigkeitsanforderung bei der Positionsbestimmung werden für diese unterschiedliche Messgeber 4 eingesetzt. Beispiele hierfür sind Hallsensoren, Resolver oder insbesondere Inkrementalgeber.

In Abhängigkeit der mit dem Messgeber 4 erfassten aktuellen Positionswerte erfolgt die Positionsregelung, wobei hierzu als Positionsregeleinheit in der Steuereinheit 3 eine Rechnereinheit 5 vorgesehen ist. Die Rechnereinheit 5 ist von einem Mikroprozessor oder dergleichen gebildet.

In einer weiteren Betriebsart kann der Synchronmotor 2 im Schrittbetrieb betrieben werden, wobei bei einem Schrittmotor dieser als sogenannter Mikrostepbetrieb ausgebildet ist. In diesem Schrittbetrieb wird der Synchronmotor 2 unabhängig von den Signalen des Messgebers 4 über die Steuereinheit 3, insbesondere über die Rechnereinheit 5 dadurch gesteuert, indem dem Synchronmotor 2 ein sinusförmiger Stromvektor eingeprägt wird. Die eingeprägte Stromstärke ist im Verhältnis zu der typisch auftretenden Motorlast stark überhöht, damit gewährleistet ist, dass die gewünschte Motorbewegung tatsächlich ausgeführt wird.

In einer dritten Betriebsart wird der Synchronmotor 2 mit einer sensorlosen Regelung betrieben, wobei die entsprechende Regeleinheit wiederum in der Rechnereinheit 5 integriert ist. Die sensorlose Regelung stellt wiederum eine Positionsregelung dar, wobei diese jedoch ohne externe Sensorik und insbesondere unabhängig von den Signalen des Messgebers 4 erfolgt.

Bei der sensorlosen Regelung wird der Umstand ausgenutzt, dass magnetische Kenngrößen des Synchronmotors 2, nämlich insbesondere die Induktivitäten der Primärteile beziehungsweise die in diesen induzierten Spannungen in charakteristischer Weise von den Relativpositionen der Primär- und Sekundärteile abhängen und damit Informationen über deren aktuelle Relativpositionen liefern.

Bei einem rotativen Synchronmotor 2 besteht der Stator typischerweise aus mit Wicklungen versehenen Polköpfen, welche den Innenseiten des beweglichen Rotors gegenüberliegen. Zur Bestimmung der Rotordrehlage kann am Sternpunkt der Polwicklungsschaltung des Stators das Potential abgegriffen und erfasst werden.

Je nach aktueller Lage der Polköpfe relativ zum Erregerfeld des Rotors ergeben sich unterschiedliche Magnetisierungen der Polwicklungskerne, die sich auf die Induktivitäten der Polwicklungen auswirken und damit das erfasste Potential beeinflussen. Zur Erhöhung der Nachweisempfindlichkeit kann zusätzlich eine Magnetmaterialanordnung vorgesehen sein, welche den Rotor des Synchronmotors 2 beispielsweise ringförmig umschließt. Diese Magnetmaterialanordnung weist eine in Umfangsrichtung periodische Struktur unterschiedlicher Zonen auf. Dadurch wird die Induktivität der Polwicklungen in Abhängigkeit der Drehlage des Rotors relativ zu dieser Magnetmaterialanordnung charakteristisch beeinflusst. Ein derartiges Verfahren ist in der EP 100 5 716 B1 beschrieben.

Alternativ kann zur sensorlosen Regelung das in der DE 101 28 074 beschriebene Verfahren verwendet werden, deren Offenbarung in die vorliegende Anmeldung miteinbezogen wird. In diesem Fall besteht der Synchronmotor 2 vorzugsweise aus einer Linearanordnung von Primär- und Sekundärteilen. Die Bestromung der Primärteile zur Erzeugung der Magnetfelder erfolgt über wenigstens eine Stromregeleinheit. Die Stromregeleinheit weist eine Erfassungseinheit zur Ermittlung der Stellgröße der Stromregelung auf. Aus dieser Stellgröße sowie aus den von der Relativposition eines Primär- und Sekundärteils abhängigen induzierten Spannung in diesem Primärteil und/oder der Induktivität des Primärteils wird die Relativposition des Primär- und Sekundärteils ermittelt.

Mittels eines Schalters 6 erfolgt eine Umschaltung des Synchronmotors 2 zwischen dem Normalbetrieb und einem Notlaufbetrieb. Während im Normalbetrieb eine Positionsregelung in Abhängigkeit der Signale des Messgebers 4 erfolgt, ist der Notlaufbetrieb des Synchronmotors 2 unabhängig von den Signalen des Messgebers 4. Der Begriff Schalter 6 umfasst generelle Schaltmittel zur Umschaltung zwischen dem Normal- und Notlaufbetrieb. Dabei kann der Schalter 6 als Hardware-Schaltung oder als Software-Modul, welches Bestandteil der Rechnereinheit 5 ist, ausgebildet sein.

Im einfachsten Fall wird der Synchronmotor 2 im Notlaufbetrieb im Schrittbetrieb oder mit der sensorlosen Positionsregelung betrieben.

Bei der in Figur 1 dargestellten Ausführungsform der Vorrichtung 1 weist die Steuereinheit 3 einen zweiten Schalter 7 auf, mittels dessen innerhalb des Notlaufbetriebs eine fliegende Umschaltung zwischen dem Schrittbetrieb und der sensorlosen Positionsregelung erfolgt. Der zweite Schalter 7 ist dabei analog zu dem ersten Schalter 6 ausgebildet.

Zweckmäßigerweise erfolgt die Umschaltung über den zweiten Schalter 7 selbsttätig in Abhängigkeit der Geschwindigkeit des Synchronmotors 2. Dabei wird der Synchronmotor 2 unterhalb einer vorgegebenen Grenzgeschwindigkeit im Schrittbetrieb betrieben. Oberhalb der Grenzgeschwindigkeit wird der Synchronmotor 2 mit der sensorlosen Positionsregelung betrieben. Die Grenzgeschwindigkeit beträgt vorzugsweise etwa 5 bis 10% der Nenngeschwindigkeit des Synchronmotors 2.

Die Umschaltung zwischen Normalbetrieb und Notlaufbetrieb des Synchronmotors 2 kann prinzipiell manuell gesteuert werden. Dabei erfolgt die Umschaltung von Normalbetrieb in den Notlaufbetrieb bei einem Ausfall oder einer Funktionsstörung. Bei dem Ausführungsbeispiel gemäß Figur 1 erfolgt die Umschaltung selbsttätig in Abhängigkeit des Funktionszustandes des Messgebers 4.

Zur Erfassung des Funktionszustandes des Messgebers 4 weist die Steuereinheit 3 eine Fehlererkennungsschaltung 8 auf, welche als Hardware-Schaltung der Rechnereinheit 5 zugeordnet ist oder als Software-Modul in der Rechnereinheit 5 integriert ist.

Mit der Fehlererkennungsschaltung 8 ist insbesondere abprüfbar, ob bei den Zuleitungen zum Messgeber 4 ein Kabelbruch oder dergleichen vorliegt. Somit kann zum Beispiel abgeprüft werden, ob der Messgeber 4 an eine Versorgungsspannung angeschlossen ist oder ob von diesem Signale ausgegeben werden.

Die in der Fehlererkennungsschaltung 8 generierten Ausgangssignale werden dem ersten Schalter 6 zugeführt. Dadurch erfolgt mittels des Schalters 6 eine Umschaltung in den Notlaufbetrieb, sobald in der Ferhlererkennungschaltung 8 ein Defekt oder ein Ausfall des Messgebers 4 detektiert wird.

Alternativ oder zusätzlich wird die Funktionsfähigkeit mit der sensorlosen Regelung überwacht. Dabei werden fortlaufend die mit dem Messgeber 4 ermittelten aktuellen Positionswerte mit den von der sensorlosen Regelung ermittelten Positionswerte verglichen. Der Vergleich erfolgt in der Rechnereinheit 5. Dabei ist in dieser berücksichtigt, dass von der sensorlosen Regelung generell die Positionswerte in einem größeren Raster erfasst werden als dies bei dem Messgeber 4 der Fall ist. Durch diesen Vergleich kann nicht nur der Ausfall, sondern auch eine Funktionsstörung des Messgebers 4 erfasst werden. Bei Auftreten einer derartigen Störung wird in der Rechnereinheit 5 ein entsprechendes Ausgangssignal generiert, mit welchem der Schalter 6 angesteuert wird, worauf eine Umschaltung in den Notlaufbetrieb erfolgt.

### Bezugszeichenliste

- (1): Vorrichtung
- (2): Synchronmotor
- (3): Steuereinheit
- (4): Messgeber
- (5): Rechnereinheit
- (6): Erster Schalter
- (7): Zweiter Schalter
- (8): Fehlererkennungsschaltung

## Patentansprüche

1. Verfahren zum Betrieb eines Synchronmotors, in dessen Normalbetrieb die Signale wenigstens eines Messgebers (4) zur Positionsregelung des Synchronmotors (2) verwendet werden, **dadurch gekennzeichnet, dass** der Synchronmotor (2) in einen Notlaufbetrieb umschaltbar ist, in welchem der Synchronmotor (2) unterhalb einer Grenzgeschwindigkeit im Schrittbetrieb und oberhalb der Grenzgeschwindigkeit mit einer sensorlosen Positionsregelung betrieben wird.

2. Verfahren nach Anspruch 1, **dadurch gekennzeichnet, dass** die Umschaltung zwischen Normalbetrieb und Notlaufbetrieb in Abhängigkeit der Signale des Messgebers (4) erfolgt.

3. Verfahren nach Anspruch 2, **dadurch gekennzeichnet, dass** die Umschaltung in den Notlaufbetrieb bei Vorliegen eines Defektes des Messgebers (4) erfolgt.

4. Verfahren nach einem der Ansprüche 1 - 3, **dadurch gekennzeichnet, dass** die Umschaltung in den Notlaufbetrieb selbsttätig oder manuell erfolgt.

5. Verfahren nach einem der Ansprüche 1 - 4, **dadurch gekennzeichnet, dass** bei der sensorlosen Positionsregelung des Synchronmotors (2) zur Bestimmung der Relativposition von Primärteilen, in welchen durch Bestromung ein Magnetfeld generiert wird, und magnetischen Sekundärteilen die Induktivitäten der Primärteile und/oder die in diesen induzierten Spannungen erfasst werden.

6. Verfahren nach einem der Ansprüche 1 - 5, **dadurch gekennzeichnet, dass** die sensorlose Positionsregelung während des Normalbetriebes aktiviert ist, und dass in Abhängigkeit deren Ausgangssignale die Umschaltung in den Notlaufbetrieb erfolgt.

7. Verfahren nach einem der Ansprüche 1 bis 6, **dadurch gekennzeichnet, dass** die Grenzgeschwindigkeit weniger als 10% der Nenngeschwindigkeit des Synchronmotors (2), insbesondere 5% der Nenngeschwindigkeit beträgt.

8. Vorrichtung zum Betrieb eines Synchronmotors, umfassend eine Steuereinheit (3) mit einer Positionsregeleinheit zum Betrieb des Synchronmotors (2) in einem Normalbetrieb, wobei der Positionsregeleinheit als Eingangsgrößen die Signale wenigstens eines Messgebers (4) zugeführt sind, **dadurch gekennzeichnet, dass** Mittel zum Umschalten in einen Notlaufbetrieb vorgesehen sind, in welchem der Synchronmotor (2) unterhalb einer Grenzgeschwindigkeit im Schrittbetrieb und oberhalb der Grenzgeschwindigkeit mit einer sensorlosen Regelung betrieben wird.

9. Vorrichtung nach Anspruch 8, **dadurch gekennzeichnet, dass** der Synchronmotor (2) von einem Schrittmotor oder Servomotor gebildet ist.

10. Vorrichtung nach einem der Ansprüche 8 oder 9, **dadurch gekennzeichnet, dass** der Messgeber (4) von einem Inkrementalgeber, einem Resolver oder einer Hallsensor-Anordnung gebildet ist.

11. Vorrichtung nach einem der Ansprüche 8 - 10, **dadurch gekennzeichnet, dass** die Steuereinheit (3) eine Fehlererkennungsschaltung (8) zur Erfassung von Defekten der Anschaltung des Messgebers (4) aufweist.

12. Vorrichtung nach einem der Ansprüche 8 - 11, **dadurch gekennzeichnet, dass** in der Steuereinheit (3) mittels der sensorlosen Positionsregelung die Funktionsfähigkeit des Messgebers (4) überprüfbar ist.

13. Vorrichtung nach einem der Ansprüche 11-12, **dadurch gekennzeichnet, dass** die Mittel zum Umschalten in den Notlaufbetrieb von einem Schalter (6) gebildet sind, auf dessen Eingang die Ausgangssignale der Fehlererkennungsschaltung (8) und/oder der sensorlosen Regelung geführt sind.

14. Vorrichtung nach einem der Ansprüche 8 - 13, **dadurch gekennzeichnet, dass** die Steuereinheit (3) einen Schalter (7) aufweist, mittels dessen der Synchronmotor (2) im Notlaufbetrieb in Abhängigkeit dessen Geschwindigkeit zwischen dem Schrittbetrieb und dem Betrieb mit der sensorlosen Regelung umschaltbar ist.

## Claims

1. Method of operating a synchronous motor, in normal operation of which the signals of at least one measurement transmitter (4) are used for positional regulation of the synchronous motor (2), **characterised in that** the synchronous motor (2) can be switched over to an emergency running operation in which the synchronous motor (2) is operated below a limit speed in stepped operation and above the limit speed with a sensorless positional regulation.

2. Method according to claim 1, **characterised in that** the switching over between normal operation and emergency running operation is carried out in dependence on the signals of the measurement transmitter (4).

3. Method according to claim 2, **characterised in that** the switching over to emergency running operation is carried out in the presence of a defect of the measurement transmitter (4).

4. Method according to one of claims 1 to 3, **characterised in that** the switching over to the emergency running operation takes place automatically or manually.

5. Method according to one of claims 1 to 4, **characterised in that** in the case of sensorless positional regulation of the synchronous motor (2), for determination of the relative position of primary parts, in which a magnetic field is generated by current flow, and magnetic secondary parts the inductances of the primary parts and/or the voltages induced therein are detected.

6. Method according to one of claims 1 to 5, **characterised in that** the sensorless positional regulation is activated during normal operation and the switching over to emergency running operation is carried out in dependence on the output signals thereof.

7. Method according to one of claims 1 to 6, **characterised in that** the limit speed is less than 10% of the rated speed of the synchronous motor (2), particularly 5% of the rated speed.

8. Device for operating a synchronous motor, comprising a control unit (3) with a position regulating unit for operation of the synchronous motor (2) in a normal operation, wherein the signals of at least one measurement transmitter (4) are fed to the position regulating unit as input magnitudes, **characterised in that** means for switching over to an emergency running operation are provided, in which the synchronous motor (2) is operated below a limit speed in stepped operation and above the limit speed with a sensorless regulation.

9. Device according to claim 8, **characterised in that** the synchronous motor (2) is formed by a stepping motor or a servomotor.

10. Device according to one of claims 8 and 9, **characterised in that** the measurement transmitter (4) is formed by an incremental transmitter, a resolver or a Hall sensor arrangement.

11. Device according to one of claims 8 to 10, **characterised in that** the control unit (3) comprises a fault recognition circuit (8) for detection of defects in the connection of the measurement transmitter (4).

12. Device according to one of claims 8 to 11, **characterised in that** the functional capability of the measurement transmitter (4) can be checked in the control unit (3) by means of the sensorless positional regulation.

13. Device according to one of claims 11 and 12, **characterised in that** the means for switching over to the emergency running operation are formed by a switch (6), to the input of which the output signals of the fault recognition circuit (8) and/or the sensorless regulation are fed.

14. Device according to one of claims 8 to 13, **characterised in that** the control unit (3) comprises a switch (7), by means of which the synchronous motor (2) can be switched over to emergency running operation in dependence on the speed thereof between the stepped operation and the operation with the sensorless regulation.

## Revendications

1. Procédé pour faire fonctionner un moteur synchrone en mode normal duquel on utilise les signaux d'au moins un transmetteur de mesure (4) pour la régulation de position du moteur synchrone (2), **caractérisé par le fait que** le moteur synchrone (2) peut être commuté dans un mode de secours dans lequel le moteur synchrone (2) fonctionne en mode pas à pas au-dessous d'une vitesse limite et avec une régulation de position sans capteur au-dessus de la vitesse limite.

2. Procédé selon la revendication 1, **caractérisé par le fait que** la commutation entre mode normal et mode de secours s'effectue en fonction des signaux du transmetteur de mesure (4).

3. Procédé selon la revendication 2, **caractérisé par le fait que** la commutation en mode de secours s'effectue en cas de défaut du transmetteur de mesure (4).

4. Procédé selon l'une des revendications 1 à 3, **caractérisé par le fait que** la commutation en mode de secours s'effectue automatiquement ou manuellement.

5. Procédé selon l'une des revendications 1 à 4, **caractérisé par le fait que** lors de la régulation de position sans capteur du moteur synchrone (2), pour déterminer la position relative de pièces primaires, dans lesquelles un champ magnétique est généré par application de courant, et de pièces secondaires magnétiques, on saisit les inductances des pièces primaires et/ou les tensions induites dans celles-ci.

6. Procédé selon l'une des revendications 1 à 5, **caractérisé par le fait que** la régulation de position sans capteur est activée pendant le mode normal et que la commutation dans le mode de secours s'effectue en fonction de ses signaux de sortie.

7. Procédé selon l'une des revendications 1 à 6, **caractérisé par le fait que** la vitesse limite est inférieure à 10 % de la vitesse nominale du moteur synchrone (2) et en particulier égale à 5 % de la vitesse nominale.

8. Dispositif pour faire fonctionner un moteur synchrone, comprenant une unité de commande (3) avec une unité de régulation de position pour faire fonctionner le moteur synchrone (2) dans un mode normal, les signaux d'au moins un transmetteur de mesure (4) étant amenés en tant que grandeurs d'entrée à l'unité de régulation de position, **caractérisé par le fait qu'**il est prévu des moyens pour la commutation dans un mode de secours dans lequel le moteur synchrone (2) fonctionne en mode pas à pas au-dessous d'une vitesse limite et avec une régulation sans capteur au-dessus de cette vitesse limite.

9. Dispositif selon la revendication 8, **caractérisé par le fait que** le moteur synchrone (2) est formé par un moteur pas à pas ou un servomoteur.

10. Dispositif selon l'une des revendications 8 ou 9, **caractérisé par le fait que** le transmetteur de mesure (4) est formé par un transmetteur incrémentiel, un résolveur ou un agencement de capteur à effet Hall.

11. Dispositif selon l'une des revendications 8 à 10, **caractérisé par le fait que** l'unité de commande (3) présente un circuit de détection de défaut (8) pour la saisie de défauts de connexion du transmetteur de mesure (4).

12. Dispositif selon l'une des revendications 8 à 11, **caractérisé par le fait que** le bon fonctionnement du transmetteur de mesure (4) est vérifiable dans l'unité de commande (3) au moyen de la régulation de position sans capteur.

13. Dispositif selon l'une des revendications 11 à 12, **caractérisé par le fait que** les moyens de commutation dans le mode de secours sont formés par un commutateur (6) à l'entrée duquel sont amenés les signaux de sortie du circuit de détection de défaut (8) et/ou de la régulation sans capteur.

14. Dispositif selon l'une des revendications 8 à 13, **caractérisé par le fait que** l'unité de commande (3) présente un commutateur (7) au moyen duquel le moteur synchrone (2) en mode de secours peut être commuté en fonction de sa vitesse entre le mode pas à pas et le fonctionnement avec la régulation sans capteur.
